Europäisches Patentamt

European Patent Office

Office européen des brevets

(11) Veröffentlichungsnummer: **0 377 775**
**A1**

(12) **EUROPÄISCHE PATENTANMELDUNG**

(21) Anmeldenummer: **89108392.5**

(22) Anmeldetag: **10.05.89**

(51) Int. Cl.⁵: **B65G 15/52, B65G 17/06**

(30) Priorität: **09.01.89 DE 8900158 U**

(43) Veröffentlichungstag der Anmeldung:
**18.07.90 Patentblatt 90/29**

(84) Benannte Vertragsstaaten:
**AT BE CH DE ES FR GB IT LI NL SE**

(71) Anmelder: **JONGE POERINK B.V.**
**Postbus 4**
**NL-7620 AA Borne(NL)**

(72) Erfinder: **Poerink, Nikolaas Jonge**
**Prins Bernardlaan 25**
**NL-7620 AA Borne(NL)**

(74) Vertreter: **Schulze Horn, Stefan, Dipl.-Ing.**
**M.Sc.**
**Goldstrasse 36**
**D-4400 Münster(DE)**

(54) **Förderband.**

㊗ Förderband (1), bestehend aus wenigstens zwei zueinander parallelen, endlos umlaufenden, durch Kettenräder antreibbaren Ketten (2, 2') mit jeweils einer Anzahl von einander übergreifenden Kettengliedern (20) sowie aus einer Anzahl von quer zu den Ketten (2, 2') angeordneten, endseitig mit diesen verbundenen Tragstäben (3), wobei die Enden (31, 32) der Tragstäbe als Scharnierstifte für die Kettenglieder (20) dienend je zwei von diesen durchdringen und wobei der zwischen den Enden (31, 32) liegende übrige Teil der Tragstäbe (3) als Tragbereich des Förderbandes (1) dient, wobei die Tragstäbe (3) an beiden Längsseiten des Förderbandes (1) - in Bezug auf das obere, fördernde Trum des Förderbandes (1) gesehen - über die Oberseite der Kettenglieder (20) nach außen weitergeführt sind und die Enden (31, 32) der Tragstäbe (3) U-förmig nach unten und innen zurückgebogen sind und von außen her die Kettenglieder (20) durchdringen. Vorteilhaft können die Tragstäbe (3) in der Horizontalebene mäanderförmig gebogen sein.

Fig. 1

EP 0 377 775 A1

## Förderband

Die Erfindung betrifft ein Förderband, bestehend aus wenigstens zwei zueinander parallelen, endlos umlaufenden, durch Kettenräder antreibbaren Ketten mit jeweils einer Anzahl von einander übergreifenden Kettengliedern sowie aus einer Anzahl von quer zu den Ketten angeordneten, endseitig mit diesen verbundenen Tragstäben, wobei die Enden der Tragstäbe als Scharnierstifte für die Kettenglieder dienend je zwei von diesen durchdringen und wobei der zwischen den Enden liegende übrige Teil der Tragstäbe als Tragbereich des Förderbandes dient.

Förderbänder der genannten Art sind bekannt und werden insbesondere im industriellen Bereich verbreitet für innerbetriebliche Transportaufgaben eingesetzt. Dabei sind im wesentlichen zwei Ausführungen gängig:

Die erste Ausführung besitzt durchgehend gerade Tragstäbe, die mit ihren Enden von innen nach außen die Kettenglieder der seitlichen Ketten durchdringen. Ein derartiges Förderband ist zwar in der Herstellung relativ einfach, weist jedoch den Nachteil auf, daß der Tragbereich der Tragstäbe tiefer liegt als die Oberkante der seitlichen Ketten. Dies führt dazu, daß ein Ausschieben von zu fördernden Gutstücken von der Seite her und deren Abschieben zur Seite hin unmöglich ist; vielmehr müssen die Gutstücke hier jeweils zunächst angehoben werden, um seitwärts bewegt werden zu können. Außerdem steht als Tragbereich lediglich die Fläche zwischen den Ketten zur Verfügung.

Die zweite bekannte Ausführung des Förderbandes der eingangs genannten Art besitzt Tragstäbe, die an ihren Enden jeweils kurbelartig gebogen sind, wobei die Abbiegung nach unten weist und wobei auch hier die Enden der Tragstäbe die Kettenglieder von innen nach außen durchdringen. Dadurch wird zwar erreicht, daß der Tragbereich oberhalb der Kettenoberkante zu liegen kommt, es bleibt jedoch der Nachteil bestehen, daß der Tragbereich auf die flächen zwischen den Ketten beschränkt bleibt. Als weiterer Nachteil tritt hier hinzu, daß beim Fördern von schweren Gutstücken hohe Drehmomente an den Enden der Tragstäbe entstehen, die deren Verbindung zu den Kettengliedern stark beansprucht, was entweder zu frühzeitigen Schäden führt oder eine sehr stabile und damit teure Konstruktion erfordert.

Es stellt sich daher die Aufgabe, ein Förderband der eingangs genannten Art zu schaffen, welches ein unbehindertes seitliches Auf- und Abschieben von Gutstücken erlaubt, welches einen verbreiterten Tragbereich bietet und welches auch für das Fördern von schweren Gutstücken geeignet ist und dabei einen geringen Flächendruck aufweist.

Die Lösung dieser Aufgabe gelingt erfindungsgemäß durch ein Förderband der eingangs genannten Art, welches dadurch gekennzeichnt ist, daß die Tragstäbe an beiden Längsseiten des Förderbandes - in Bezug auf das obere, fördernde Trum des Förderbandes gesehen - über die Oberseite der Kettenglieder nach außen weitergeführt sind und daß die Enden der Tragstäbe U-förmig nach unten und innen zurückgebogen sind und von außen her die Kettenglieder durchdringen.

Das neue Förderband bietet einen besonders breiten Tragbereich, der sich zu den Seiten hin bis über die Ketten erstreckt. An den Förderbandlängsseiten liegen die Umbiegungen der Tragstäbe, deren Rundheit ein problemloses Auf- und Abschieben von Gutstücken gewährleistet. Unterstützungslose Bereiche am Rand des Förderbandes sowie Stufen und Kanten am Rand des Tragbereiches treten hier nicht mehr auf. Da bei Bedarf die Tragstäbe zusätzlich oben auf den Ketten aufliegen können, können auch schwere Gutstücke auf Dauer ohne Schaden für das Förderband transportiert werden. Zugleich ist das Förderband einfach und kostengünstig herstellbar, da es trotz seiner Vorteile gegenüber dem eingangs dargelegten Stand der Technik ebenfalls aus nur zwei unterschiedlichen Bauteilen, nämlich identischen Kettengliedern und identischen Tragstäben, besteht.

Weitere Ausgestaltungen und vorteilhafte Weiterbildungen der Erfindung, die u. a. eine Kurvengängigkeit der Förderbandes ermöglichen, gehen aus den Unteransprüchen 2 bis 10 hervor.

Vorteilhaft können die Tragstäbe auch zur Erreichung eines verringerten Flächendrucks in der Horizontalebene mäanderförmig gebogen sein.

Im folgenden werden Ausführungsbeispiele der Erfindung anhand einer Zeichnung erläutert. Die Figuren der Zeichnung zeigen:

Figur 1 einen Abschnitt eines Förderbandes in einer ersten Ausführung in Aufsicht,

Figur 2 ein Detail des Förderbandes aus Figur 1 in perspektivischer Ansicht,

Figur 3 einen Abschnitt des Förderbandes in einer zweiten Ausführung in Aufsicht,

Figur 4 ein Detail des Förderbandes aus Figur 3 in perspecktivischer Ansicht,

Figur 5 das Förderband aus Figur 3 in einer Förderbandkurve, in Aufsicht,

Figur 6 einen Abschnitt des Förderbandes in einer dritten Ausführung in Aufsicht,

Figur 7 ein Detail des Förderbandes aus Figur 6 in perspectivischer Ansicht,

Figur 8 eine Aufsicht auf das Förderband mit mäanderförmig geformten Stäben und

Figur 9 die Seitenansicht des Bandes gemäß Figur 8.

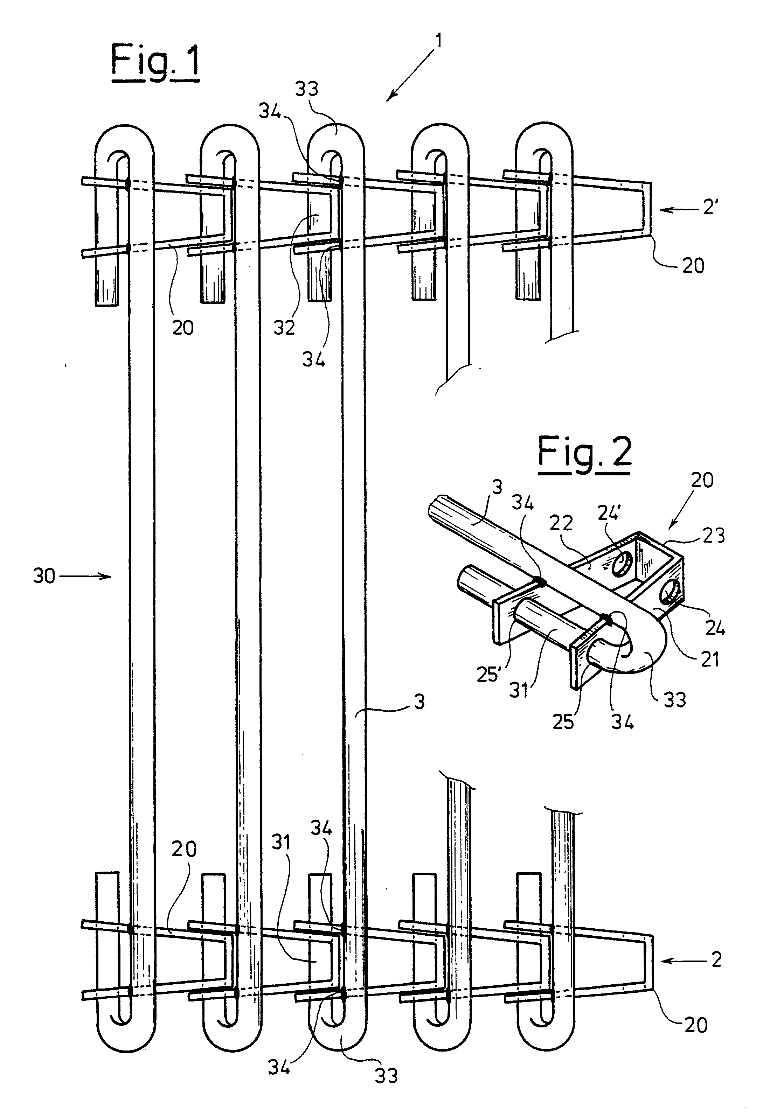

Wie die Figur 1 der Zeichnung zeigt, besteht das erste dargestellte Ausführungsbeispiel des Förderbandes 1 aus zwei in Abstand zueinander parallel verlaufenden Ketten 2 und 2' sowie aus einer Anzahl von quer zu den Ketten 2 und 2' verlaufenden Tragstäben 3. Die Ketten 2 und 2' sind aus einer Anzahl von Kettengliedern 20 gebildet, die jeweils in Aufsicht gesehen V- oder U-förmig gebogene Streifen sind. Zwei benachbarte Kettenglieder 20 sind jeweils gelenkig miteinander verbunden, wobei hier die Enden 31 bzw. 32 der Tragstäbe 3 als Scharnierstifte für die Kettenglieder 20 dienen. Die Tragstäbe 3 sind hierzu über die Oberseite der Ketten 2 und 2' nach außen weitergeführt und von dort nach innen und unten zurückgebogen und durch dringen die Kettenglieder 20 von auße4n nach innen. Die seitliche Begrenzung des Förderbandes 1 wird also durch eine Reihe von Umbiegungen 33 der Tragstäbe 3 gebildet. Der Bereich der Tragstäbe 3 zwischen den bei den endseitigen Umbiegungen 33 bildet einen Tragbereich 30 des Förderbandes 1, auf welchen die zu transportierenden Gutstücke aufgelegt werden können.

Bei den in der Zeichnung dargestellten Ausführungsbeispielen bestehen die Kettenglieder 20 und die Tragstäbe 3 jeweils aus Metall, vorzugsweise Edelstahl. Dementspreschend ist hier zur Fixierung der einzelnen Teile der Förderbandes 1 vorgesehen, daß jeder Tragstab 3 im Bereich der beiden Ketten 2 und 2' mit jeweils einem der beiden von ihm durchdrungenen Kettenglieder 20 starr verbunden, hier verschweißt ist. Entsprechende Schweißpunkte sind mit der Bezugsziffer 34 bezeichnet. Damit bilden jeweils zwei Kettenglieder 20 sowie ein Tragstab 3 eine Einheit, die mit weiteren, ebenso zusammengesetzten Einheiten gelenkig verbunden ist. Das Förderband 1 kann damit über Kettenräder an seinen endpunkten umgelenkt und angetrieben werden.

Aus der Detaildarstellung in Figur 2 ist ersichtlich, wie das Kettenglied 20 geformt ist und wie es mit dem zugehörigen Tragstab 3 verbunden ist. Das Kettenglied 20 hat hier eine V-form mit zwei auseinanderlaufenden Schenkeln 21 und 22, die an ihren enger beieinanderliegenden Enden durch einen abgeflachten Übergangsbogen 23 miteinander verbunden sind. In der Nachbarschaft des Übergangsbodens 23 verlaufen durch die beiden Schenkel 21 und 22 zwei miteinander fluchtende Durchbrechungen 24 und 24', die ein erstes Durchbrechungspaar bilden. Im Bereich der freien Enden der Schenkel 21 und 22 sind zwei weitere, ebenfalls miteinander fluchtende Durchbrechungen 25 und 25' vorgesehen, durch welche hier das Ende 31 des Tragstabes 3 geführt ist. Im rechten unteren Teil der Figur 2 ist deutlich die Umbiegung 33 des Tragstabes 3 erkennbar, die das Förderband zur Seite hin begrenzt. Weiterhin zeigt die Figur 2 an der Oberseite des Kettengliedes 20 zwei dieses mit dem Tragstab 3 verbindende Schweißpunkte 34.

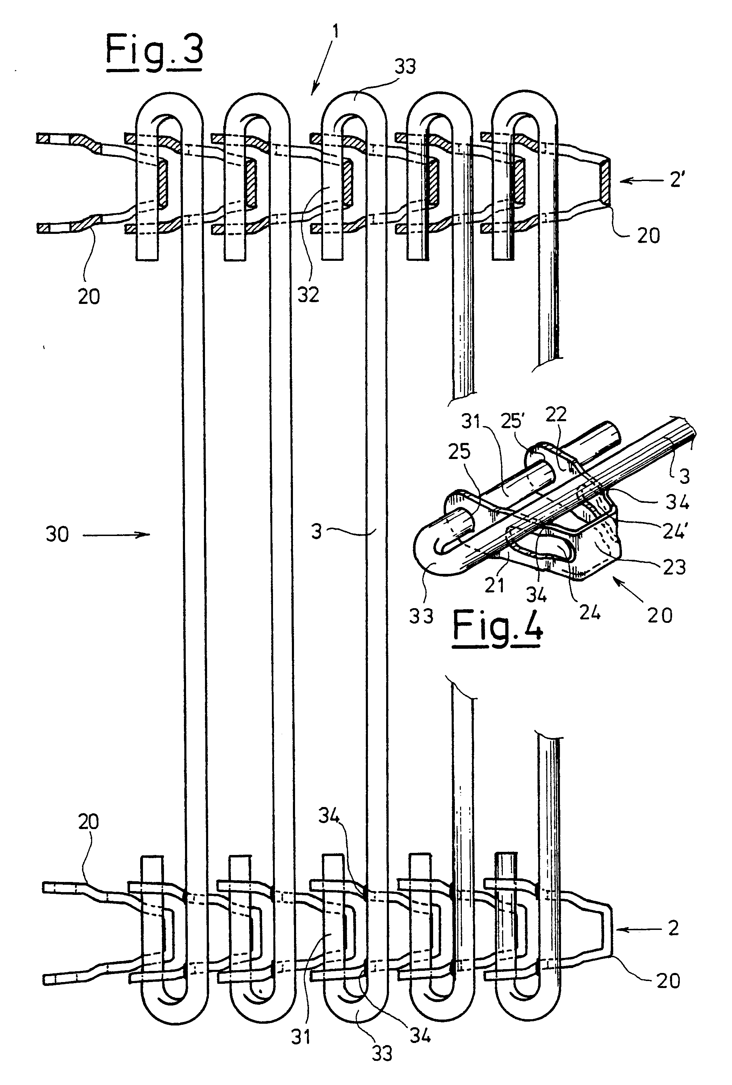

Bei dem Ausführungsbeispiel nach den Figuren 1 und 2 sind die Durchbrechungen 24, 24', 25 und 25' jeweils als kreisrunde Bohrungen ausgeführt; im Unterschied hierzu zeigt das Ausführungsbeispiel gemäß den Figuren 3 und 4 Kettenglieder 20, bei denen das eine Paar von Durchbrechungen 24 und 24' als Paar von Langlöchern ausgebildet ist, die sich in Laufrichtung des Förderbandes 1 erstrecken. Dies wird besonders deutlich aus der im oberen Teil der Figur 3 im Schnitt gehaltenen Darstellung der Kette 2' mit ihren Kettengliedern 20 sowie aus der perspektivischen Ansicht des Kettengliedes 20 gemäß Figur 4.

Die Tragstäße 3 sind hier wie zuvor schon beschrieben ausgeführt, d. h. an ihren Enden 31 und 32 nach unten und innen umgebogen. Der mittlere Teil der Tragstäbe 3 bildet hier wieder den Tragbereich 30. Ebenfalls erfolgt auch hier wieder die Verbindung zwischen den Kettengliedern 20 und dem jeweils zugehörigen Tragstab 3 mittels Verschweißungen 34 im Bereich vor den Umbiegungen 33 der Tragstäbe 3. Die Ketton 2 und 2' des Förderbandes 1 sind auch bei dem Ausführungsbeispiel gemäß Figur 3 identisch ausgeführt.

Die Figur 4 zeigt die schon erwähnten Langlöcher 24 und 24', die in den beiden Schenkeln 21 und 22 des Kettengliedes 20 in der Nachbarschaft des Übergangsbodens 23 angeordnet sind. Die Durchbrechungen 25 und 25' am freien Ende der Schenkel 21 und 22 sind dagegen auch hier als runde Bohrungen ausgeführt.

Ein weiterer Unterschied zu dem zuvor beschriebenen Ausführungsbeispiel besteht darin, daß die Schenkel 21 und 22 hier nicht eben ausgebildet sind, sondern in Stufen ihren Abstand voneinander vergrößern. Dies vermindert insbesondere ein Klemmen der Kettenglieder 20 untereinander bei scharfen Umlenkungen im Bereich der Förderbandendpunkte.

Weiterhin zeigt die Figur 4 weider den Tragstab 3, der auf der Oberseite des Kettengliedes 20 mit diesem über Schweißpunkte 34 fest verbunden ist und über seine Umbiegung 33 nach unten von außen nach innen durch die Durchbrechungen 25 und 25' des Kettengliedes 20 mit seinem Ende 31 hindurchgeführt ist.

Wie aus den Figuren 3 und 4 deutlich wird, besteht zwischen den einzelnen Kettengliedern 20 der beiden Ketten 2 und 2' ein Längsspiel, welches dazu dient, dem Förderband 1 eine gewisse Kurvengängigkeit zu verleihen.

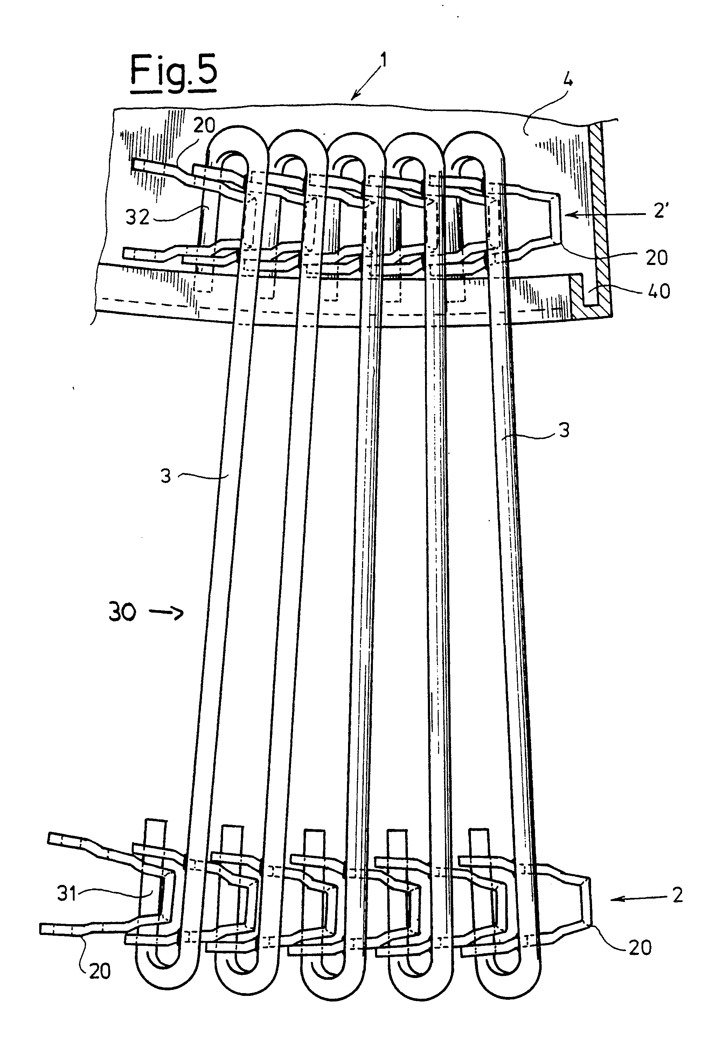

Diese Kurvengängigkeit ist besonders deutlich aus Figur 5 ersichtlich, die das Förderband 1 im Bereich einer Förderbandkurve zeigt. Im unteren Teil der Figur 5 haben die Kettenglieder 20 der in der Figur 5 unteren Kette 2 den maximal möglichen Abstand zueinander. Im oberen Teil der Figur 5 dagegen haben die Kettenglieder 20 der dort laufenden Kette 2′ den minimal möglichen Abstand voneinander, so daß sich ein gebogener, kurvenförmiger Verlauf des Förderbandes 1 ergibt. Dabei sind die Kettenglieder 20 beider Ketten 2 und 2′ so ausgebildet, wie anhand der Figuren 3 und 4 erläutert.

Die Tragstäbe 3 bilden hier wieder den Tragbereich 30, wobei die Tragstäbe 3 im kurveninneren Teil des Förderbandes 1 etwas enger zusammenliegen als im kurvenäußeren Teil des Förderbandes 1. Die Enden 31 und 32 der Tragstäbe 3 sind wieder wie zuvor bechrieben umgebogen und durch die Kettenglieder 20 hindurchgeführt.

Wie aus der Figur 5 schließlich noch ersichtlich ist, liegen im kurveninneren Bereich des Förderbandes 1, d. h. bei der Kette 2′, die Kettenglieder 20 mit ihrem Übergangsbogen 23 unterhalb der Tragstäbe 3, was dafür sorgt, daß ein Ausbrechen von Kettengliedern 20 nach oben ausgeschlossen wird.

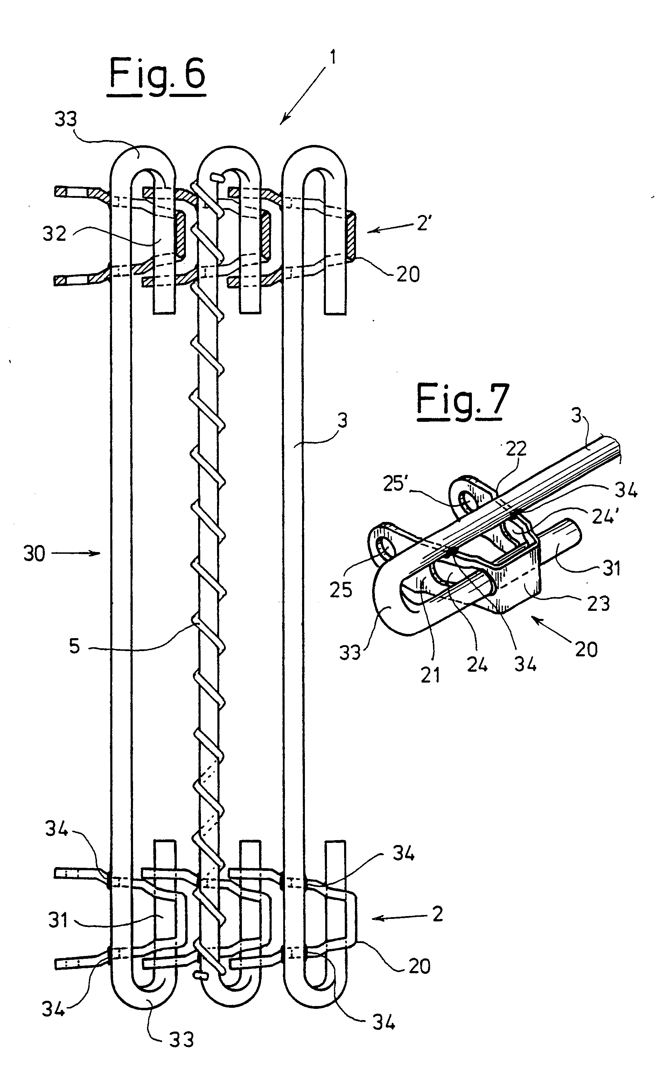

Ein weiteres Ausführungsbeispiel des Förderbandes 1 ist in den Figuren 6 und 7 dargestellt, wobei die Kettenglieder 20 der beiden Ketten 2 und 2′ sowie die Tragstäbe 3 genau den Kettengliedern 20 und Tragstäben 3 und Ausführungsbeispiels gemäß den Figuren 3 bis 5 entsprechen. Der Unterschied besteht hier darin, daß die Tragstäbe 3 nicht mit dem Kettenglied 20 fest verbunden sind, durch dessen hintere Durchbrechungen sie laufen, sondern mit dem Kettenglied 20 jeweils fest verbunden sind, durch dessen vordere Durchbrechungen sie verlaufen. Dies zeigt besonders deutlich die Figur 7, aus der hervorgeht, daß das Ende 31 des Tragstabes 3 durch die vorderen, hier wieder als Langlöcher ausgebildeten Durchbrechungen 24 und 24′ läuft. Da jedoch der Tragstab 3 mittels der Schweißpunkte 34 fest mit diesem Kettenglied 20 verbunden ist, liegt das Tragstabende 31 ohne Spiel in Kettengliedlängsrichtung in den Durchbrechungen 24 und 24′. Damit wird durch einfache Änderung der Verbindungsweise zwischen Kettengliedern 20 und Tragstäben 3 ein Förderband 1 geschaffen, welches die zuvor vorhandene Kurvengängigkeit nich mehr aufweist. Damit sind mit identischen Bauteilen zwei unterschiedliche Ausführungen des Förarbandes 1 realisierbar, was Herstellungs- und Lagerhaltungskosten vermindert.

Der Figur 6 ist noch eine Drahtspirale 5 entnehmbar, die beispielhaft auf dem einen der Tragstäbe 3 angeordnet ist. Sie dient dazu, transportierte Fördergutstücke von den Tragstäben 3 etwas abzuheben, was insbesondere für Kühlzwecke vorteilhaft ist. Im übrigen entspricht das Ausführungsbeispiel des Förderbandes 1 nach den Figuren 6 und 7 dem anhand der Figuren 3 bis 5 beschriebenen Ausführungsbeispiel, d. h. die Bezugsziffern der Figuren 6 und 7 entsprechen denen der Figuren 3 bis 5.

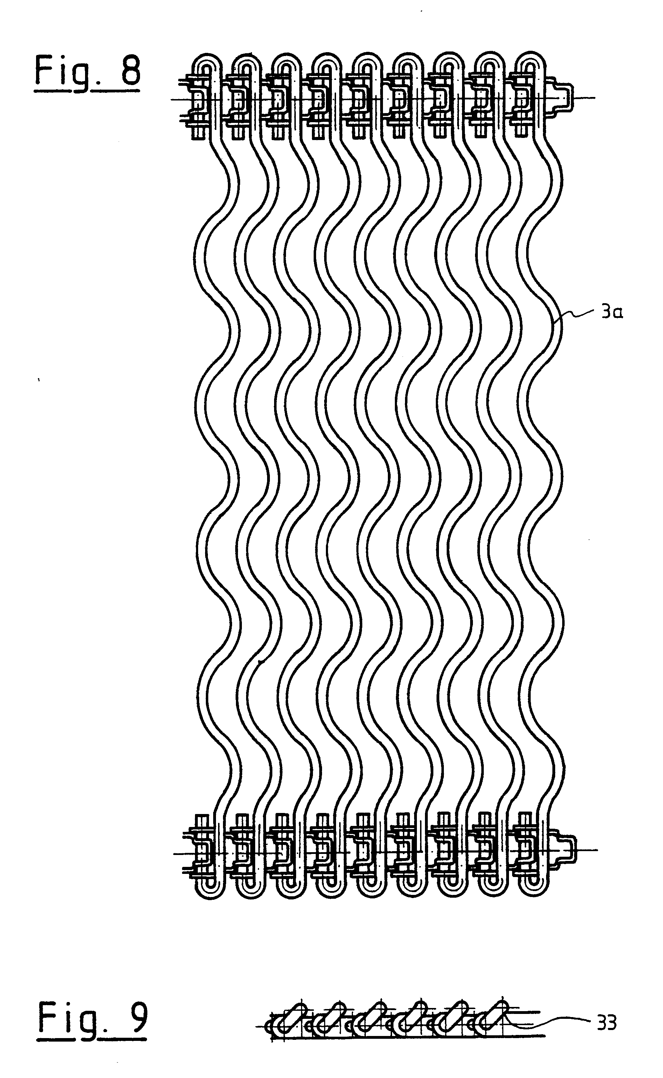

Zur Verringerung des Flächendrucks auf die transportierten Gutsütcke können weiterhin gemäß Fig. 8 und 9 statt der Geraden Tragstäbe (3) nach den Fig. 1 bis 7 auch in der Horizontalebene mäanderförmig gebogene Tragstäbe (3a) verwendet werden, deren lage dann auch vorteilhaft durch die Gutstücke stabilisiert wird.

## Ansprüche

1. Förderband, bestehend aus wenigstens zwei zueinander parallelen, endlos umlaufenden, durch Kettenräder antreibbaren Ketten mit jeweils einer Anzahl von einander übergreifenden Kettengliedern sowie aus einer Anzahl von quer zu den Ketten angeordneten, endseitig mit diesen verbundenen Tragstäben, wobei die Enden der Tragstäbe als Scharnierstifte für die Kettenglieder dienen je zwei von diesen durchdringen und wobei der zwischen den Enden liegende übrige Teil der Tragstäbe als Tragbereich des Förderbandes dient, dadurch gekennzeichnet, daß die Tragstäbe (3) an beiden Längsseiten des Förderbandes (1) - in Bezug auf das obere, fördernde Trum des Föarderbandes (1) gesehen - über die Oberseite der Kettenglieder (20) nach außen weitergeführt sind und daß die enden (31, 32) der Tragstäbe (3) U-förmig nach unten und innen zurückgebogen sind und von außen her die Kettenglieder (20) durchdringen.

2. Förderband nach Anspruch 1, dadurch gekennzeichnet, daß die Kettenglieder (3) jeweils einstückig aus V-förmig gebogenen Streifen mit auseinanderlaufenden Schenkeln (21, 22) gebildet sind und jeweils ein vorderes und ein hinteres Paar von fluchtenden Scharnierdurchbrechungen (24, 24′; 25, 25′) für die Tragstabenden (31, 32) aufweisen.

3. Förderband nach Anspruch 1, dadurch gekennzeichnet, daß die Kettenglieder (20) jeweils einstückig aus U-förmig gebogenen Streifen mit stufenförmig ihren Abstand voneinander vergrößernden Schenkeln (21, 22) gebildet sind und jeweils ein vorderes und ein hinteres Paar von fluchtenden Scharnierdurchbrechungen (24, 24′, 25, 25′) für die Tragstabenden (31, 32) aufweisen.

4. Förderband nach den Ansprüchen 1 bis 3, dadurch gekennzeichnet, daß je Kettenglied (20) ein Paar der Durchbrechungen (24, 24′; 25, 25′) als Paar von sich in Laufrichtung des Förderbandes (1) erstreckenden Langlöchern (24, 24′) ausgebildet ist.

5. Förderband nach den Ansprüchen 1 bis 4, dadurch gekennzeichnet, daß jeder Tragstab (3) jeweils endseitig mit dem einen der beiden von ihm durchdrungenen Kettenglieder (20) starr verbunden ist.

6. Förderband nach den Ansprüchen 1 bis 5, dadurch gekennzeichnet, daß die Tragstäbe (3) in eine einheitlicht Richtung gekippt sind und am Rand ihres Tragbereiches (30) jeweils mit ihrer Unterseite im Bereich der Kettenglieder (20) auf diesen aufliegen.

7. Förderband nach den Ansprüchen 1 bis 6, gekennzeichnet durch im Tragbereich (30) der Tragstäbe (3) auf diese aufgeschobene Drahtspiralen (5).

8. Förderband nach den Ansprüchen 1 bis 7, dadurch gekennzeichnet, daß die umgebogenen, von außen nach innen durch die Kettenglieder (20) geführten Enden (31, 32) der Tragstäbe (3) über die Kettenglieder (20) nach innen unter den Tragbereich (30) vorragen und je Förderbandlängsseite in einer nach außen offenen Führungsnut (40) eines unter den Tragbereich (30) ragenden Trag- und Führungsrahmens (4) des Förderbandes (1) gleiten.

9. Förderband nach den Ansprüchen 1 bis 8, dadurch gekennzeichnet, daß die Kettenglieder (20) und die Tragstäbe (3) aus Kunststoff, vorzugsweise mit Glasfaserverstärkung, bestehen.

10. Förderband nach den Ansprüchen 1 bis 8, dadurch gekennzeichnet, daß die Kettenglieder (20) und die Tragstäbe (3) aus Metall, vorzugsweise Edelstahl, bestehen.

11. Förderband nach einem der vorhergehenden Ansprüche, dadurch gekennzeichnt, daß die Tragstäbe (3) in der Horizontalebene mäanderförmig gebogen sind.

Fig.1

Fig.2

Fig.3

Fig.4

Fig.5

Fig.6

Fig.7

## Fig. 8

3a

## Fig. 9

33

Europäisches
Patentamt

**EUROPÄISCHER RECHERCHENBERICHT**

Nummer der Anmeldung

EP 89108392.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | US - A - 3 225 898 <br> (ROINESTAD) <br> * Fig. 1 * <br> -- | 1,3-5 | B 65 G 15/52 <br> B 65 G 17/06 |
| Y | DE - A - 1 556 597 <br> (KLINKICHT) <br> * Fig. 1 * <br> -- | 1,3-5 | |
| A | US - A - 3 842 969 <br> (EUVERAD) <br> * Fig. 1 * <br> ---- | 1 | |

| | RECHERCHIERTE SACHGEBIETE (Int Cl⁵) |
|---|---|
| | A 01 D <br> B 65 G |

Der vorliegende Recherchenbericht wurde für alle Patentansprüche erstellt

| Recherchenort | Abschlußdatum der Recherche | Prüfer |
|---|---|---|
| WIEN | 09-03-1990 | BAUMGARTNER |